# DEMANDE DE BREVET EUROPEEN

(11) **EP 2 455 222 A1**
(43) Date de publication de la demande: **23.05.2012**
(21) Numéro de dépôt: 11306457.0
(22) Date de dépôt: 09.11.2011
(51) Int. Cl.: B32B 27/08, B32B 27/30, B32B 27/32

(54) **Film en matière plastique étirable**

(30) Priorité: 18.11.2010 FR 1059459
(71) Demandeur: Veriplast Flexible, 43290 Montfaucon en Velay (FR)
(72) Inventeur: Alaux, Patrick, 42240 Unieux (FR)
(74) Mandataire: Thivillier, Patrick

(57) **Abrégé**

Le substrat du film comprend une couche médiane entre deux couches externes caractérisé en ce que la couche médiane est composée d'environ 50 % d'EVA (Ethylène Vinyle Acetate) et d'environ 50 % de polymère ionique, ladite couche incorpore un polymère ionique entre 15 et 30 % en poids du substrat et avantageusement 25 %. pour obtenir une résistance à la déchirure selon la méthode d'ELMENDORF, inférieure à 2g/µm aussi bien dans le sens travers (ST) que dans le sens longueur (SL) et une contrainte au seuil d'écoulement, dans le sens travers, inférieure à 85 daN/cm2.

## Description

L'invention se rattache au secteur technique des films en matière plastique pour l'emballage notamment.

Plus particulièrement, l'invention concerne un film en matière plastique étirable.

Ce type de films est parfaitement connu pour un homme du métier et présente de nombreux avantages notamment par rapport à un film rétractable étant donné qu'il n'est pas nécessaire de le soumettre à une source de chaleur, pour supprimer ses contraintes internes, afin de lui permettre de se resserrer ou de se rétracter sous l'effet d'un refroidissement rapide. Par contre, un film étirable est moins bien adapté pour assurer le groupage de lots de produits, en considérant la difficulté qui existe pour déchirer le film qui, sous un effort de traction correspondant à une déchirure, s'allonge de manière significative sans pour autant se déchirer, sauf à exercer un effort, très important, y compris lorsque le film présente par exemple une amorce de déchirure.

Cet inconvénient ne se retrouve pas dans un film rétractable dont la composition peut être déterminée pour faciliter sa déchirabilité comme il ressort d'essais effectués selon la méthode de mesure de ELMENDORF, correspondant à la norme française NFT 54-141.

A partir de cet état de la technique, le problème que se propose de résoudre l'invention est de proposer un film en matière plastique étirable qui présente des caractéristiques spécifiques lui permettant d'être facilement déchiré en combinant, par conséquent, les avantages des films étirables (économie d'énergie, diminution des couts et du poids) et des films rétractables (propagation de la déchirure facile).

Autrement dit, le but recherché selon l'invention est de pouvoir emballer et conditionner, sous forme de lots par exemple, des produits divers au moyen d'un film étirable, en observant qu'il existe désormais des moyens permettant la mise en place du film étirable, tout en offrant la possibilité de pouvoir facilement déchirer ledit film.

L'invention a donc pour objet un film en matière plastique étirable dont le substrat comprend, de manière connue, une couche médiane entre deux couches externes.

Compte tenu du problème posé à résoudre, la couche médiane incorpore un polymère ionique pour obtenir une résistance à la déchirure, selon la méthode d'ELMENDORF, inférieure à 2g/µm aussi bien dans le sens travers (ST) que dans le sens longueur (SL) et une contrainte au seuil d'écoulement, dans le sens travers, inférieure à 85 daN/cm2.

D'une manière avantageuse, le polymère qui constitue un agent fragilisant, est un ionomère de sodium comme celui commercialisé par la société EXXON, sous la dénomination IOTEK notamment IOTEK 3110.

Selon une autre caractéristique la couche médiane est composée d'environ 50 % d'EVA (Ethylène Vinyle Acetate) et d'environ 50 % de polymère. Des résultats avantageux ont été obtenus lorsque le polymère ionique est incorporé entre 15 et 30 % en poids de substrat et avantageusement 25 %

La couche médiane représente environ 50 à 60 % en poids du substrat tandis que chacune des couches externes représente environ 20 à 25 % en poids de substrat.

Chaque couche externe est composée d'environ 95 % de polymère métallocène et d'environ 5 % d'additifs.

Les caractéristiques du film selon l'invention améliorent d'une manière importante et significative, la propagation de la déchirure par rapport à un film étirable classique comme indiqué ci-après

Des essais comparatifs ont été réalisés à partir d'un film en matière plastique étirable dont le substrat comprend une couche médiane entre deux couches externes, l'épaisseur du film étant de 30µm. Considérons par exemple un film dont les couches externes sont identiques et composées d'environ 95 % d'un polymère métallocène du type 1018 EB et de 5 % d'additifs.

Selon l'état antérieur de la technique la couche médiane est composée de 100 % d'EVA. Selon la méthode d'ELMENDORF, la déchirure dans le sens longueur est comprise entre 7 et 11g/µm, tandis que la déchirure dans le sens travers est comprise entre 12 et 21g/µm. La contrainte au seuil d'étirement (ST) exprimé en daN/cm2 selon la norme ISO 527, est comprise entre 60 et 70 daN/cm2.

Selon l'invention, en considérant le même type de film étirable, c'est-à-dire dont les couches externes sont identiques et composées d'environ 95 % de polymère metallocène du type 1018 EB et de 5 % d'additifs, mais dont la couche médiane, selon l'invention, incorpore un agent fragilisant sous forme d'un polymère ionique à hauteur de 50 % , les résultats suivants sont obtenus :
■ Résistance à la déchirure toujours selon la méthode d'ELMENDORF, inférieure à 2 g/µm aussi bien dans le sens longueur que dans le sens travers ;
■ Contrainte au seuil d'écoulement (ST), inférieure à 85 daN/cm2 ;

Il ressort donc de ces essais comparatifs que pour un film en matière plastique étirable tri-couches présentant sensiblement les mêmes caractéristiques d'étirabilité (contrainte au seuil d'écoulement), la résistance à la déchirure est très fortement diminuée et peut être équivalente à celle obtenue pour un film rétractable.

Comme indiqué, le film étirable selon les caractéristiques de l'invention trouve une application particulièrement avantageuse pour l'emballage et le groupage de plusieurs produits identiques ou non tels que des récipients. Le film plastique est par conséquent étiré et formé pour entourer l'ensemble des produits à regrouper, cette opération pouvant être effectuée par tous moyens connus et appropriés du type manuel ou automatique. Les extrémités du film sont accouplées, par exemple, au moyen d'une ligne de soudure.

Dans ce cas, une partie du film, par exemple au niveau de la ligne de soudure, présente une amorce de déchirure permettant par conséquent de déchirer effectivement le film de manière manuelle sans nécessiter d'efforts importants, cette déchirure pouvant s'effectuer selon la direction correspondant à l'amorce de déchirure. Cette amorce de déchirure peut être effectuée selon différentes solutions par exemple au moyen d'une prédécoupe, d'une zone de fragilisation, ...... en combinaison ou non avec une languette.

Les avantages ressortent bien de la description.

## Revendications

1. Film en matière plastique étirable dont le substrat comprend une couche médiane entre deux couches externes **caractérisé en ce que** la couche médiane est composée d'environ 50 % d'EVA (Ethylène Vinyle Acetate) et d'environ 50 % de polymère ionique, ladite couche incorpore un polymère ionique entre 15 et 30 % en poids du substrat et avantageusement 25 %. pour obtenir une résistance à la déchirure selon la méthode d'ELMENDORF, inférieure à 2g/µm aussi bien dans le sens travers (ST) que dans le sens longueur (SL) et une contrainte au seuil d'écoulement, dans le sens travers, inférieure à 85 daN/cm2.

2. Film étirable selon la revendication 1, **caractérisé en ce que** la couche médiane représente environ 50 à 60 % en poids du substrat, chacune des couches externes représentant environ 20 à 25 % en poids du substrat.

3. Film étirable selon la revendication 1, **caractérisé en ce que** chaque couche externe est composée d'environ 95 % de polymère métallocène et d'environ 5 % d'additifs.
